# EUROPEAN PATENT SPECIFICATION

(11) **EP 0 676 058 B1**
(45) Date of publication and mention of the grant of the patent: **09.04.2003**
(21) Application number: 94905463.9
(22) Date of filing: 21.12.1993
(51) Int. Cl.: G02F 1/15

(54) **ELECTROCHROMIC MATERIALS AND DISPLAYS**
ELEKTROCHROME MATERIALIEN UND ANZEIGEN
MATERIAUX ET AFFICHAGES ELECTROCHROMES

(30) Priority: 22.12.1992 US 994813
(43) Date of publication of application: 11.10.1995
(73) Proprietor: MONSANTO COMPANY, St. Louis, Missouri 63167 (US)
(72) Inventor: COLEMAN, James, Patrick, Maryland Heights, MO 63043 (US)
(74) Representative: Colens, Alain
(86) International application number: PCT/US93/12431
(87) International publication number: WO 94/015246

(56) References cited:
- EP-A- 0 333 700
- EP-A- 0 486 387
- WO-A-87/01515
- WO-A-91/13381
- DE-A- 3 810 923
- US-A- 3 978 007
- US-A- 4 550 982
- PROCEEDINGS OF THE SID, vol.23, no.4, 1982, LOS ANGELES, US pages 245 - 248 T. MASUMI ET AL. 'Response-Improved Electrochromic Display Based on Organic Materials'
- PATENT ABSTRACTS OF JAPAN vol. 11, no. 9 (P-534) 10 January 1987 & JP,A,61 185 730 (MITSUBISHI ELECTRIC) 19 August 1986 cited in the application & DATABASE WPI Week 8639, Derwent Publications Ltd., London, GB; AN 86-256080 & JP,A,61 185 730 (MITSUBISHI DENKI) cited in the application
- JOURNAL OF MACROMULECULAR SCIENCE - CHEMISTRY, vol.A26, no.1, 1989, NEW YORK, US pages 593 - 608 K. NOMURA ET AL. 'Electrochemical and Electrochromic Properties of Polymer Complex Films Composed of Polytetramethyleneviologen and Poly(p-Styrenesulfonic Acid) Containing a Conductive Powder' cited in the application
- PATENT ABSTRACTS OF JAPAN vol. 11, no. 233 (P-600) 30 July 1987 & JP,A,62 044 719 (ALPS ELECTRIC) 26 December 1987
- PATENT ABSTRACTS OF JAPAN vol. 11, no. 236 (P-601) 4 August 1987 & JP,A,62 049 333 (FUJIKURA) 4 March 1987

## Description

Disclosed herein are electrochromic materials, useful for fabricating electrochromic laminates which are adaptable for electrochromically-functional image displays.

### BACKGROUND OF THE INVENTION

Japanese Patent Kokai 61-185,730 discloses composite films of electrochromic materials such as polyviologen which are bonded to the surface of electrically conductive particles such as tin oxide by using cyanuric chloride. Electrochromic displays are produced by coating a transparent electrode (e.g. tin oxide) with a mixture of the composite material dispersed in a solution containing a polymer complex such as a polyionic complex of a macromolecular viologen with macromolecular sulfonic acid. An aqueous solution of sodium sulfate in contact with the composite provides an electrochromic display element. Color changes with the application of voltage are visible through the transparent electrode. The element uses an ionically conducting electrochromic layer and requires the use of a transparent electrode to view the color change.

Japanese Patent Kokai 59-113,422 discloses a solid electrochromic display comprising a transparent substrate with a transparent electrode coating, an electrochromic layer and another electrode. For example, an electrochromic layer was cast onto a transparent indium tin oxide electrode from a solution of a tetrathiafulvalene, polymethacrylonitrile and lithium perchlorate (ion-acceptor); the other electrode was vacuum deposited metal. Response time for various displays was 2-5 seconds and the cell requires the use of a transparent electrode to view the color change.

Japanese Patent Kokai 63-207,856 discloses a macromolecular display material comprising a composite of a transparent resin such as PVC and an electrically conductive polymer such as polypyrrole or polythiophene containing an electrochromic molecule such as tungstic acid. Such composite materials coated on conductive, tin oxide-coated glass provide display materials when immersed in an acetonitrile solution. This cell produced marginal color contrast from grey to dark blue.

Japanese Patent Kokai 01-107,135 discloses blends of electrochromic viologen derivatives with polymers to provide a polymeric film or sheet that can be useful in the manufacture of an oxygen sensor. The reduced viologen derivative dispersed in a polymer matrix changes color readily on contact with oxygen. Reversible color change requires extensive treatment to reduce the electrochromic material.

European Patent Publication 193,978 discloses a process for the uniform incorporation of powders into polymer layers which are useful in electrochromic instruments.

United States Patent 4,810,067 discloses an electrochromic device in which an electrochromic layer, positioned between two electrodes, comprises a gelled polymeric matrix, e.g. polyvinylbutyral, which supports electrochromic particles, e.g. lead oxide, and ion producing particles, e.g. lithium chloride.

United States Patent 4,550,982 discloses an all solid state organic electrochromic display device which comprises a polymer layer comprising at least one organic electrochromic material and at least one ionic material.

European Patent Publication 0 403 180 (Cookson Group, PLC) discloses powdery or granular metal coated with inherently conductive polymer, e.g. polyaniline or polypyrrole, for use in an EMI or RFI shielding material for compounding into polymer.

Nomura et al. in Journal of Macromolecular Science - Chemistry, A26(2&3), pages 593-608 (1989) disclose electrochemical and electrochromic properties of polymer complex films composed of polymeric salts of polytetramethyleneviologen and poly(p-styrene-sulfonic acid) containing a conductive powder.

T. Masumi et al., Proc. S.I.D., Vol. 23 (1982), pages 245-248, discloses an electrochromic display using composite films consisting of viologen polymer complex and conductive powder. WO-87/01515 discloses an alkaline dry cell container for energy storage in which a hard interior conductive coating is formed from a composition containing carbon particles carried in a binder and a volatile carrier.

### SUMMARY OF THE INVENTION

This invention provides, according to claim 1, electroconductive particles comprising electrically conductive non-metallic particles coated with electrochromic material. Such non-metallic particles can comprise carbon particles or electrically conductive metal compound, e.g. metal oxide or metal salt, particles. Alternatively, the electrically conductive non-metallic particles can comprise a conductive material, e.g. doped metal oxide, coated on a non-conducting substrate, e.g. mineral particles such as titanium dioxide. For applications in the field of electrochromic displays where sharply contrasting images are desired, it is often preferred that the particles be transparent or lightly colored so as to not interfere with visibility of electrochromic effects. Preferred electrically conductive material includes doped tin oxide such as antimony-doped tin oxide (ATO), indium-doped tin oxide (ITO) or halogen-doped tin oxide, e.g. fluorine-doped tin oxide (FTO). Useful electrochromic materials for coating the electrically conductive material include polyaniline, polypyrrole, polythiophene, polyvinylferrocene, polyviologen, tungsten oxide, iridium oxide, molybdenum oxide, nickel oxide and Prussian blue.

This invention also provides dispersions of such electrically conductive particles in an essentially electrically isolative, transparent or translucent matrix of a melt processable polymer, polymerizable monomer or oligomer, or a liquid containing dissolved or dispersed melt processable polymer, polymerizable monomer or oligomer. These dispersions are useful for preparing electrically conductive, essentially ionically isolative composite layers having electrically conductive particles dispersed in a polymer matrix. Such composite layers are useful as coatings for providing electrochemically resistant metal laminates and as components in laminate electrochromic displays.

Electrochromic laminates of this invention useful as active electrochromic displays comprise, as recited in calim 10, segments having: (a) a layer of one or more areas of an electrically conductive, essentially ionically isolative material; (b) a layer of ionically conductive material; and (c) electrochromic material at an interfacial zone between layers (a) and (b). To function as an electrochromic display, a laminate also must have means for applying an electrical potential between the ionically conductive and ionically isolative layers to generate an electrochromic effect, e.g. at the ionically conductive side of the interfacial zone.

The materials of this invention allow for the high speed fabrication of flexible displays, e.g. by printing methods. Thus, this invention also provided methods of fabricating flexible electrochromic displays, as recited in claim 14.

### BRIEF DESCRIPTION OF THE DRAWINGS

Figures 1-6 are partial side views of laminates useful as electrochromic displays.
Figure 7 is a view of an electrode pattern used to illustrate an electrochromic display.

### DETAILED DESCRIPTION OF PREFERRED EMBODIMENTS

As used herein the term "electrochromic" refers to a material which changes color when subjected to an electrochemical potential. Such electrochromic materials are known in the art and include polyaniline, polypyrrole, polythiophene, nickel oxide, polyvinylferrocene, polyviologen, tungsten oxide, iridium oxide, molybdenum oxide, Prussian blue (ferricferrocyanide), molybdates and tungstates. In certain aspects of this invention, the electrochromic materials include metals which can be electrically plated from solution in an ionically conductive layer; such metals include bismuth, copper, nickel, zinc, silver and cobalt. In other cases, e.g. where the electrochromic material is provided in a separate interfacial zone, the electrochromic material can comprise electrochromic bipolymeric salts such as poly(xylylviologen)/poly(styrene sulfonate).

As used herein the term "electrically conductive" refers to a material which conducts electricity including metals such as copper, nickel and aluminum, metal oxides such as tin oxide, ITO, ATO, FTO, conductive ink comprising conductive particles such as silver flake or carbon dispersed in a polymer or resin solution, and conductive polymers such as polyaniline and polypyrrole. Such electrically conductive materials are useful as electrodes in electrochromic displays. When electrically conductive materials are used as electrodes, e.g. in displays or other devices, electrochromic materials in contact with conductors, such as metals, can be electrochemically active, e.g. polyaniline can oxidize non-noble metal electrodes such as copper electrodes. Thus, where extended life is desired, an electrically conductive material, e.g. carbon ink, should be selected to minimize electrochemical instability arising from contact with electrochromic materials and electrolyte. Where there is adequate inter-electrode spacing, highly conductive carbon can be used to overcoat each electrode element. Where inter-electrode spacing is minimal, the electrode pattern can be protected by applying a thin overlapping layer of a high resistance carbon ink to minimize inter-electrode short circuiting.

This invention provides electroconductive particles comprising electrically conductive non-metallic particles coated with electrochromic material. The term "non-metallic" specifically excludes metals such as platinum, silver, copper and the like. Such non-metallic particles can comprise carbon particles or particles of an electrically conductive metal compound, e.g. metal salt or, preferably, a metal oxide. Preferred metal oxide particles are doped tin oxide particles. Electrically conductive non-metallic particles can also comprise a conductive material, e.g. carbon or doped metal oxide such as ATO, coated on a non-conducting substrate, e.g. mineral particles such as titanium dioxide. For applications in the field of electrochromic displays where sharply contrasting images are desired, it is often preferred that the particles be transparent or lightly colored so as to not interfere with visibility of electrochromic effects. Preferred particulate substrates include transparent, translucent or lightly colored mineral particles. Desirable light colors include white, yellow, ocher, saffron, light grey or pastel-colored particles - it being understood that pastels include light colors of red, blue and green hues. Because of its white color an especially preferred particulate substrate is titanium dioxide particles. For many applications a preferred electrically conductive metal particle is titanium dioxide particles coated with layers of ATO and polyaniline or polypyrrole.

Dispersions of this invention are prepared by dispersing electrically conductive particles in an essentially electrically isolative transparent or translucent matrix of a melt processable polymer, polymerizable monomer or oligomer, or a liquid containing dissolved or dispersed melt processable polymer, polymerizable monomer or oligomer. The particles can be dispersed in the polymer by a variety of methods. For instance, particles can be dispersed in molten polymer or in solutions of polymer, e.g. toluene solutions of polybutadiene or aqueous emulsions of polyvinyl chloride, by homogenization blending. While the polymer can be thermoset, thermoplastic or elastomeric, in many cases it is preferred that the polymer be optically transparent or translucent, more preferably optically clear, thermoplastic polymer. Useful thermoplastic polymers include polystyrene, polyacrylates, polymethacrylates such as polymethylmethacrylate, polyurethanes, polyolefins such as high or low density polyethylene, linear low density polyethylene and polypropylene, polyesters such as polyethylene terephthalate (PET), polyamides such as nylon-6 and nylon-6,6, polycarbonate, polyvinylchloride (PVC), polyvinylacetal such as polyvinylbutyral, polyvinyl esters such as polyvinylacetate, polyvinyl alcohol, copolymers such as ethylene vinylacetate copolymer, styrene-acrylonitrile copolymer and styrene maleic anhydride copolymer, graft copolymers such as ABS, and blends thereof. Useful thermoset polymers include acrylate resins, alkyd resins, urethane resins, epoxy resins, polyester resins, phenol formaldehyde resins and bismaleimide resins. Useful elastomers include acrylic rubber such as polybutylacrylate, olefin rubber such as polybutadiene, EPDM rubber, EP rubber, styrene butadiene rubber (SBR) and nitrile rubber, and thermoplastic elastomers such as styrene-butadiene block copolymers and blends of polypropylene and EPDM. The above polymers and other polymers useful in this invention are chosen for use in this invention because they do not conduct ions. It is not known whether all of the above-described polymers absolutely do not transmit ions, e.g. at some de minimis level. In this regard it is expected that there is a threshold ion transmission level that can be tolerated. Regardless, the above polymers and other useful un-named polymers are characterized as essentially ionically isolative. The polymer melt or solution containing dispersed electroconductive particles can be applied as a coating by conventional and well-known methods.

These dispersions are useful for preparing electrically conductive, essentially ionically isolative composite layers having electrically conductive particles dispersed in a polymer matrix. Such composite layers are useful as coatings for providing electrochemically active metals with electrochemically resistant coatings and as component layers in electrochromic displays. For preparing electrochromic displays preferred dispersions are in an optically transparent or translucent polymer matrix. Thermoplastic polymer can be a useful polymer matrix, e.g. for providing electrochromic films by melt processing or solution casting techniques. Other useful dispersions include electrically conductive particles in polymerizable oligomer or monomer; such dispersions are adaptable for providing electrochromic films of a thermoset or crosslinked polymer matrix having electrically conductive particles dispersed therein. In addition, dispersions of electrically conductive particles in a liquid containing dissolved or dispersed melt processable polymer, polymerizable monomer or oligomer are useful as inks for printing patterns of composite film having electrically conductive particles dispersed in a polymer matrix.

When the dispersed particles comprise electrochromic material, such dispersions are especially useful in providing laminates for electrochromic displays. For instance, in electrochromic displays an ionically isolative composite film is provided with electrodes on one side of the composite film and ionically conductive layer applied to the other side of the composite film.

Alternatively, electrochromic material can be applied as a separate layer in a laminate between a non-electrochromic, ionically isolative composite layer and an ionically conductive layer. Separate interfacial electrochromic layers can comprise thin layers of solution cast electrochromic material as defined herein. For instance, a useful interfacial electrochromic layer comprises a composite bipolymer salt, e.g. poly(xylylviologen)/poly(styrenesulfonate).

Optionally, the electrochromic material can be dissolved or dispersed in the ionically conductive layer, e.g. in at least a boundary layer thereof. Useful electrochromic materials for incorporation in an ionically conductive layer include tungstates, molybdates and electrically depositable metals such as bismuth, copper, nickel, zinc, silver, cobalt and the like.

A preferred aspect of this invention also provides inks, adaptable to a variety of printing methods, comprising an emulsion or solution of polymer having electrically conductive, preferably also electrochromic, particles dispersed therein. Preferred particles are electrically conductive, e.g. titanium dioxide particles coated with electrically conductive ITO or ATO; electrically conductive and electrochromic, e.g. titanium dioxide particles coated with electrically conductive ITO or ATO which is coated with an electrochromic material such as polyaniline or polypyrrole; or electrochromic particles at least partially coated with an electrically conductive material, e.g. tungsten oxide particles coated with ITO.

In the laminates of this invention the electrically conductive particles are provided in a composite with a polymer matrix. In the case of visual displays it is generally preferred that the polymer matrix transmit visible light, i.e. be transparent or translucent to the visible light spectrum, more preferably be optically clear.

Preferably, the dispersion is applied as a thin coating, e.g. about 1-25 micrometer thick, which forms a polymeric film, e.g. on solidification of the melt or evaporation of solvent. The polymeric film is disposed as a polymer matrix having dispersed therein electroconductive particles at sufficiently high density as to provide a moderate electrical resistance across the thickness of the film, e.g. on the order of 10 ohms to 1,000 ohms, so that the composite polymer layer is electrically conductive. Surface resistivity of such films is typically at least 100 ohms/square or higher, say at least 1,000 ohms/square. In making functional electrochromic displays, desirable ranges of surface resistivity of the ionically isolative layer depends on the geometric shape and separation of electrode circuitry. For instance, widely separated electrodes can tolerate ionically isolative material of low resistivity; as electrode separation is reduced, higher surface resistivity is required. With narrow electrode separation it is often desirable to use ionically isolative material that has surface resistivity in the range of 10,000 to 1,000,000 ohms/square, e.g. on the order of 100,000 ohms/square for separation of 25 to 200 micrometers.

An electrochromic laminate of this invention comprises segments having a layer of one or more areas of an electrically conductive, essentially ionically isolative material and a layer of ionically conductive material. In these laminates there is electrochromic material at an interfacial zone between the ionically conductive and ionically isolative layers. Preferably, the electrochromic material is dispersed or dissolved in the ionically isolative material, the ionically conductive material, or in both layers. Alternatively, the electrochromic material is in a separate interfacial layer in the interfacial zone. For electrochromic displays, the laminates also comprise means for applying an electrical potential between the ionically conductive and ionically isolative layers to generate an electrochromic effect, typically at the ionically conductive side of the interfacial zone. In preferred laminates the electrochromic material is dispersed in the ionically isolative layer and consists of electrically conductive metal oxide material coated with electrochromic material dispersed in a transparent or translucent polymer matrix. In a preferred aspect of the invention the electrically conductive material comprises titanium dioxide particles coated with ITO or ATO and an outer layer of electrochromic material, e.g. polyaniline, polypyrrole, polythiophene, polyvinylferrocene, polyviologen, tungsten oxide, iridium oxide, molybdenum oxide, nickel oxide, Prussian blue, etc.

The laminates of this invention comprise an ionically conductive layer which is in contact with electrochromic material to provide an interface for generating electrochromic effects. The ionically conductive layer typically comprises an aqueous or organic solvent based electrolyte. Common aqueous based electrolytes are polymeric gels containing a hygroscopic material or a humectant. A preferred hygroscopic material is a deliquescent material such as lithium chloride, calcium chloride, glycerine, sodium dihydrogen phosphate or lithium trifluoromethyl sulfonate. Organic based electrolytes can comprise, for example, tetralkylammonium salts dissolved in polyalkylene glycol. Such ionically conductive layer preferably comprises an aqueous polymeric gel which can contain a humectant or hygroscopic filler. Useful hygroscopic material includes deliquescent material such as lithium chloride, calcium chloride, glycerine, sodium dihydrogen phosphate or lithium trifluoromethyl-sulfonate. A preferred aqueous polymeric gel is polyacrylamidomethylpropane-sulfonate, known as POLYAMPS. In certain of the laminates of this invention the ionically conductive layer is coated with a non-conducting, preferably light transmitting, barrier layer to maintain the gel like character of the layer. In other cases the ionically conductive layer is optionally coated with a light transmitting electrode material, e.g. ITO, in a pattern or a film.

In display laminates, electrodes can comprise electrically conductive metal, metal oxide, carbon, intrinsically conducting polymer or polymer filled with conductive particles. Laminates of this invention are operable as electrochromic displays when electrical potential is applied across the layers, e.g. by means of two or more electrodes in contact with separate areas of the ionically isolative material electrically joined by the ionically conductive layer. An electrochromic effect can be achieved when the electrical resistance between positive and negative electrodes is lowest in a path running from the electrodes to the ionically isolative material connected through the ionically conductive layer. That is, the lateral electrical conductivity in a thin layer of the composite should be lower than the conductivity through areas of the composite connected with the ionically conducting layer. This allows the production of laminates wherein there is electrical conductivity between areas of the ionically isolative layers such that the path of lowest electrical resistance between said segments is through the ionically conductive layer. In such displays there is effectively a weak short circuit that allows a charge to drain when the electrical potential is removed. That is, the electrochromic image is erasable by removal of the electrical potential that created the image. Faster erasing can be effected by applying an external short circuit of the electrodes that created the image.

In preparing the laminates of this invention an ionically isolative composite polymeric film is typically applied over one or more electrodes, e.g. an electrode pattern of metal, metal oxide, carbon, intrinsically conductive polymer or polymer composite having an electrical resistance substantially lower than the electrical resistance of the composite material of dispersed particles in a polymer matrix. When the composite polymer material is electrochromic, the material can be applied in a pattern covering individual electrodes or in an occluding layer over the electrode pattern area. In another aspect of this invention, when the composite polymer material does not contain electrochromic material, laminates can be provided by applying one or more layers of electrochromic material on the composite polymer layer, e.g. over the entire composite area or in register over the electrode pattern. Where the composite layer has an electrical conductivity less than the conductivity of the overlying ionically conductive layer, electrodes can be applied in a side-by-side manner, e.g. on the same side of a thin, but uniform, composite layer opposite the ionically conductive layer. Alternatively, electrodes can be applied to laminates in a sandwich like fashion, with one electrode at one potential on one side of the laminate in contact with the composite layer and transparent electrode, e.g. of metal oxide such as ITO, of a different potential applied to the other side of the laminate in contact with the ionically conductive layer.

In the laminates of this invention described above, the interface between the ionically conductive layer and the electrochromic material is electrochromically activatable when an electric potential is applied across said interface. For instance, the electrical resistance of a thin electrochromic composite layer is sufficiently high that side by side electrodes at a differential voltage can be used under the laminate without excessive short circuit current between side by side electrodes. That is, the path of least resistance is from one electrode through the electrochromic composite layer to an ionically conductive gel layer back through the electrochromic composite layer to the other electrode. The electrochromic effect is observed at the interface between the electrochromic composite layer and the ionically conductive layer. A transfer of electrons to the electrochromic particles requires ion transfer to or from the electrochromic material. Because the matrix polymer of the composite is essentially ionically non-conductive, ion transfer from the ionically conductive layer to electrochromic material occurs at the interface between layers and not substantially at the underlying electrode structure. The mobility of ions to or from electrochromic material at the interface allows electron transfer to the mobile ion-receptive electrochromic material at the interface. A change in the electron oxidation state of the electrochromic material results in a change in color in the material at the interface. By arranging electrodes in patterns, a variety of images can be generated by the electrochromic effect. In certain preferred aspects of this invention the electrochromic image is erasable by removal or reversal of the electrical potential which created the image. In certain displays the laminate is preferably constructed where the electrochromic material is dispersed in the ionically isolative layer and consists of electrically conductive metal oxide material coated with electrochromic material dispersed in an optically transparent or translucent polymeric matrix.

One aspect of this invention provides laminates where the electrical potential is applied across the layers by means of two or more electrodes in contact with separate areas of the ionically isolative material electrically joined by the ionically conductive layer. The electrical resistance between such electrodes is lowest in a path running from the electrodes to the ionically isolative material connected through the ionically conductive layer. Laminates having electrical conductivity between area of ionically isolative layers such that the path of lowest electrical resistance between the areas is through said ionically conductive layer are erasable by removal of the electrical potential that created said image and without external means of short circuiting the electrodes that created the image.

Finally, another aspect of this invention provides methods of fabricating flexible electrochromic displays. This method comprises the steps recited in claim 14.

In certain preferred aspects of this invention the electrodes comprise a plurality of lines having a width and separation not greater than about 1 micrometer. In preferred aspects of this invention the ionically isolative layer comprises a transparent or translucent matrix having dispersed electroconductive particles comprising mineral particles coated with electrically conductive metal and an electrochromic material; electroconductive particles can preferably comprise titanium dioxide particles coated with and electrically conductive doped tin oxide and electrochromic material.

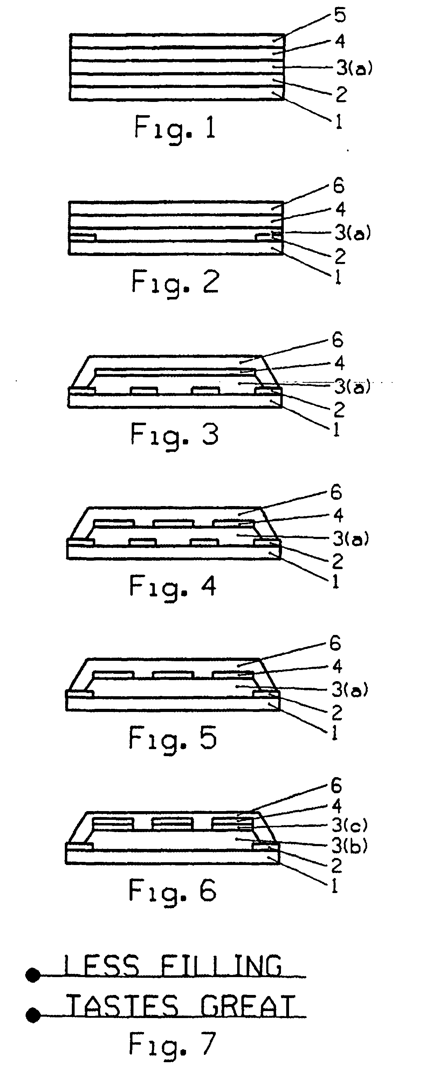

With reference to Figures 1-6 there is illustrated a variety of laminate electrochromic displays made possible by this invention. These laminates comprise a substrate 1, e.g. a nonconductive layer of polyethylene terephthalate (PET) film or polyimide film, coated with a conductive layer 2 of one or more electrodes, e.g. metal, metal oxide, conductive polymer or carbon. Layer 3(a) is an electrically conductive, essentially ionically isolative, electrochromic composite layer comprising a dispersion of electrically conductive, electrochromic particles dispersed in a polymer matrix, e.g. titanium dioxide particles coated with ATO and polyaniline dispersed in a rubber matrix. Layer 3(b) is an electrically conductive, essentially ionically isolative composite layer comprising a dispersion of electrically conductive, (non-electrochromic) particles dispersed in a polymer matrix, e.g. titanium dioxide particles coated with ATO dispersed in a rubber matrix. Layer 3(c) is a layer of electrochromic material, e.g. polyaniline. Layer 4 is an ionically conductive layer, e.g. POLYAMPS gel. Transparent conductor layer 5, e.g. an ITO coated film, can serve as an electrode and transparent, insulating layer 6, e.g. a PET film can serve to provide a barrier against, loss of electrolyte from the conductive layer. With reference to Figure 1, an electric potential between electrodes 2 and 5 will create an electrochromic effect at the interface of layers 3(a) and 4. Figure 2 illustrates a display having side-by-side electrodes 2, on substrate 1. Because the conductivity of the electrochromic composite layer 3(a) is lower than the conductivity of the ionically conductive layer 4, current will preferentially flow from one electrode through the electrochromic composite layer to the ionically conductive layer to the area above the next electrode where it will pass in a reverse direction through the electrochromic layer to the second electrode. Where the electrochromic material changes color with the loss of an anion, the electrochromic effect will be visible over one electrode. Where the electrochromic material changes color with both the gain and loss of an anion, e.g. as in the case of polyaniline, electrochromic effects will be visible over both electrodes.

Figures 3, 4, 5 and 6 illustrate bipolar electrodes. In Figures 3 and 4, an electrical potential difference across the outer electrodes will generate bipolar potential differences at different halves of the intermediate electrodes so as to create opposite electrochromic effects in the interface of layers 3(a) and 4 over the bipolar charged ends of each intermediate electrode. In Figure 5, the opposite electrochromic effects are created at the interface between layers 3(a) and 4 under the edges of the segmented electrolyte layer 4. In Figure 6, the opposite electrochromic effects are created at edges of segmented sections creating the interface of electrochromic layer 3(c) and the ionically conductive layer 4.

A preferred application for non-electrochromic composites, e.g. ATO/titanium dioxide in a polymer matrix, is for electrode coatings for electrochemical processing. For instance, an electrode comprising a copper substrate coated with a non-electrochromic composite of this invention exhibits a resistance to electrochemical redox attack similar to the electrochemical redox resistance of a platinum electrode, e.g. for voltammetric applications.

While the following examples illustrate the use of various materials in embodiments of the electrochromic inks, composites, laminates and displays and methods of this invention, it should be clear from the variety of species discussed herein that there is no intention of so limiting the scope of the invention. On the contrary, it is intended that the breadth of the invention illustrated by reference to the following examples will applies to other embodiments which would be obvious to practitioners in the electrochemical arts. The following comparative examples do not however, fall within the scope of the invention.

### EXAMPLE 1

This example illustrates embodiments of this invention employing polyaniline as an electrochromic material. Electrochromic particles were prepared using ATO coated titanium dioxide particles, 0.2 micrometer in diameter, obtained from Mitsubishi Materials Company Ltd as W-1 conducting particles. 10 g of the conducting particles were dispersed in 30 ml dilute hydrochloric acid (about 4%), in an ice bath, followed by the addition of 1 g aniline and 1.15 g ammonium persulfate (in 20 ml water) to initiate polymerization of the aniline on the ATO surface of the particles. After polymerization the solution was filtered, washed and dried providing pale green electrochromic particles, i.e. particles with an electrically conductive core (ATO on titanium dioxide) coated with an electrochromic material (polyaniline). 3 g of the electrochromic particles were dispersed with homogenization into a 10 g solution of toluene containing 3 g styrene-butadiene rubber (SBR) to provide an electrochromic ink. A multiple electrode pattern comprising silver flake conductive ink was printed onto a PET substrate. The electrode pattern was coated with a thin film of the electrochromic ink. After the electrochromic ink was allowed to dry to form a green, electrochromic composite polymer film, a layer of ionically conductive gel (i.e. POLYAMPS) was applied. The gel was covered with a second layer of PET. When any two electrodes in the pattern were subjected to a differential voltage (e.g. in the range of 0.5 to 3 volts), the electrochromic material at the interface over the more electronegative electrode (the cathode) was reduced, changing the color at the interface over the cathode to a light white color. Simultaneously, the electrochromic material at the interface over the more electropositive electrode (the anode) was oxidized, changing the color at the interface over the anode to a dark blue color.

### EXAMPLE 2

Electrochromic particles were prepared in the manner of Example 1 employing polypyrrole in place of polyaniline. The particles were employed in electrochromic displays Example 1, the polypyrrole changing reversibly from blue-black at the anode to light grey-brown at the cathode.

### EXAMPLE 3

Electrochromic particles were prepared having a tungsten dioxide electrochromic material coating over ATO/titanium dioxide conducting particles. When used in displays as in Example 1, the normally white composite layer changed reversibly to a blue color at the interface over the cathode.

### EXAMPLE 4

Electrochromic particles were prepared having Prussian Blue electrochromic material coating over ATO/titanium dioxide conducting particles; the Prussian Blue material was prepared from a mixture of ferric chloride, potassium ferricyanide and potassium chloride in water. When used in displays as in Example 1, the normally light blue composite layer changed to a white color at the interface over the cathode.

### EXAMPLE 5

Electrochromic particles were prepared by coating poly(p-xylylviologen)/poly(styrene-sulfonate) over ATO/titanium dioxide conducting particles. 10 g of conducting particles was mixed with a solution of 1 g of the polyviologen in a mixture of 24 ml of dioxane and 24 ml of concentrated HCl; the solution was dried to a powder which was ground and mixed at 3:1 with SBR (10 % in toluene), providing a suspension of electrochromic particles. The solution coated onto copper electrodes, dried and immersed in an aqueous, electrolyte solution of sodium sulfate; application of electric potential resulting in electrochromic switching between purple (cathode) and white (anode).

### COMPARATIVE EXAMPLE 6

1.5 g of conductive powder (ATO on titanium dioxide) was dispersed in 5 g of a toluene solution containing 10 wt % SBR. A 0.15 mm thick wet film of the dispersion was coated on a glass substrate; the dried film exhibited a resistance of about 10 ohms across its thickness. A PET film coated with copper was coated with the dispersion; after drying the dispersion, the laminate with a conductive composite film was immersed in 80 ml of a solution of 1 ml aniline in dilute sulfuric acid. With the application of 1-2 volts a deep blue layer of polyaniline was coated anodically onto the laminate, reversal of electrical polarity allowed the color to switch between deep blue and a yellow-green.

### COMPARATIVE EXAMPLE 7

The procedure of Comparative Example 6 was repeated except the laminate with a conductive composite film was immersed in 80 ml of a solution of 1 ml pyrrole in dilute sodium chloride. A blue-black layer of polypyrrole was coated anodically onto the laminate, reversal of electrical polarity allowed the color to switch between blue-black and grey-brown.

### EXAMPLE 8

With reference to drawings the pattern of Figure 7 was silk screen printed using silver ink (Metech 2500 M). The dried pattern was coated with a solution of 7 g toluene, 3 g of SBR having 3 g of dispersed particles of polyaniline/ATO/titanium dioxide. The dried composite layer was coated with POLYAMPS. A switching potential of ± 1.5 volts DC applied to the electrodes caused alternate blue (anode) or white (cathode) lettering to appear in a light green field.

### EXAMPLE 9

The procedure of Example 8 was repeated except the dried pattern was coated with a toluene solution of SBR having dispersed particles of polyviologen-polystyrene sulfonate/ATO/titanium dioxide. A reversible color change pattern was produced.

### COMPARATIVE EXAMPLE 10

2 g of ATO/titanium dioxide particles, 1 g of Versicon™ polyaniline (Allied-Signal) and 10 g of a toluene solution of SBR (1 g) was homogenized for one minute. 1.2 g of the homogenized dispersion was mixed with 1.2 g of a toluene solution of SBR (0.12 g) to provide a dispersion of agglomerates of conductive particles and electrochromic particles in an rubber solution. The dispersion was coated onto a PET film with copper electrodes. Application of a reversing 6 volt DC potential caused the coating over the electrodes to change slowly between dark grey and blue.

### COMPARATIVE EXAMPLE 11

The procedure of Comparative Example 10 was repeated except that conductive particles of ATO/titanium dioxide were omitted. The application of a 1.5 volt DC electric field produced no discernible electrochromic effect within a minute.

### EXAMPLE 12

With reference to Figures 3, a bipolar electrochromic display was produced by coating an electrode layer pattern from silver ink on PET film. The dried electrodes were coated with an electrochromic ink of a dispersion of polyaniline/ATO/titanium dioxide particles in a toluene solution of SBR. The dried composite layer was coated with POLYAMPS. The application of a 4 volt DC electrical potential difference across the outer electrodes generated bipolar potential differences at different halves of the intermediate electrodes so as to create blue and light green electrochromic effects on the halves of the interface over the central electrodes.

### EXAMPLE 13

The procedure of Comparative Example 10 was essentially repeated except the electrochromic dispersion was prepared from conductive particles of tungsten oxide/ATO/titanium dioxide dispersed in a toluene solution of SBR. A reversible electrochromic blue image was displayed with the alternating application of 1.5 volts DC.

### EXAMPLE 14

A solution of sulfonate-doped polyaniline in m-cresol was coated onto a PET film and dried to provide a conductive coating with a resistivity of about 100 ohms/square. A thin scratch of the conductive coating was removed to provide two contiguous electrodes which were coated with an electrochromic ink containing polyaniline/ATO/titanium dioxide dispersed in a toluene solution of SBR. The ink was dried to provide a composite coating which was coated with POLYAMPS. The alternating application of 1.5 volts DC to the electrodes caused a color change between dark blue and very pale green (almost white).

### EXAMPLE 15

The procedure of Example 14 was repeated without the electrochromic composite layer; that is, POLYAMPS was coated directed onto the polyaniline electrodes. The application of 3 volts DC caused the anode to slowly darken from a blue-green to a deeper blue-green and the cathode to lighten to a yellow-green. There was a long (several minutes) delay for color change on reversal of voltage.

### COMPARATIVE EXAMPLE 16

1 g of polyaniline was mixed with 10 g of a toluene solution of SBR (1 g) in a homogenizer for 1 minute. The dispersion was coated over electrodes printed on a PET film, dried and overcoated with POLYAMPS, providing a black colored laminate. A weak electrochromic effect was observed with the application of ± 1.5 volts DC; with 3-5 minutes of applied voltage slight lightening of the black color would be observed over the cathode, with no change observable over the anode.

3.4 g of the dispersion was blended with 0.24 g of titanium dioxide, providing a dark grey dispersion which was used to prepare a laminate having a dark grey color. With the application of 1.5 volts DC the cathode lightened to a yellowish grey and the anode darkened. With voltage reversal colors changed in 15-20 seconds.

### COMPARATIVE EXAMPLE 17

An electrochromic solution was prepared by mixing 0.1 g of lithium bromide in 5 ml of a saturated, aqueous solution of bismuth nitrate. The solution was coated onto a laminate comprising a PET film substrate, silver electrodes and a layer of ATO/titanium dioxide dispersed in SBR. With the application of 1.5 volts DC the cathode turned dark grey and slowly faded on removal of the electric field.

### EXAMPLE 18

An electrochromic dispersion was prepared by homogenizing 2 g of polyaniline/ATO/titanium dioxide particles in an emulsion of 2.4 g polyvinylchloride (PVC) and 12 g water. The viscous emulsion was coated onto silver electrodes on a PET film, dried and coated with POLYAMPS, providing a laminate that exhibited color change with the application of 1.5 volts DC.

### EXAMPLE 19

The procedure of Example 1 was essentially repeated except the electrodes on the PET film were (a) silver coated with a carbon (Metech 2513) (b) aluminum foil, (c) carbon or (d) polyaniline. The silver/carbon and aluminum foil electrodes provided rapid electrochromic display at 1.5 volts DC; the carbon electrodes, at 3 volts DC; and the polyaniline electrodes, at 10 volts DC.

### EXAMPLE 20

An electrochromic dispersion prepared by homogenizing 3 g of polyaniline/ATO/titanium dioxide in 10 g of a toluene solution of SBR (3 g) was coated over two silver/carbon electrodes on PET film, dried for 2 minutes at 110 °C, coated with a 10% aqueous solution of POLYAMPS and covered with a PET film. The electrodes were connected to a function generator supplying ± 1.5 volt square waves. At 20 Hertz a flashing electrochromic color change was clearly visible with lightening of color as the primary perceived effect. At lower frequencies alternative darkening to a deep blue could also be perceived. The laminate displayed an electrochromic effect for more than 4 million cycles.

### EXAMPLE 21.

With reference to Figure 6, a bipolar electrochromic display was constructed by coating two silver electrodes about 40 mm apart on a PET film. The area between the electrodes was coated with a layer of ATO/titanium dioxide dispersed in SBR. Three electrochromic areas were provided between the electrodes by applying area coatings of polyaniline/ATO/titanium dioxide; the electrochromic areas were coated with POLYAMPS. Application of 10 volts DC across the silver electrodes caused the edges of the polyaniline-containing areas to exhibit a bipolar electrochromic effect - color change was blue toward one electrode and white toward the other electrode.

### COMPARATIVE EXAMPLE 22

2 g of ammonium persulfate in 10 ml water was added to 1.5 g of aniline in 40 g of a 5% aqueous solution of POLYAMPS and mixed at 12-15 °C for about 20 minutes to produce a dark green, viscous solution. 10 g of the green viscous solution was mixed in a homogenizer with 6 g of ATO-coated titanium dioxide particles and 6 g of aqueous acrylic emulsion (from Sun Chemical as Flexo Imp OP varnish 49900) to provide a bipolymeric salt electrochromic ink.

### COMPARATIVE EXAMPLE 23

A calcium chloride electrolyte solution was prepared by mixing 45 g of aqueous calcium chloride solution (44%) and 28 g of hydroxyethylcellulose solution (11%); a drop of surfactant (Triton X-100) was added to the mixture to provide a solution adaptable to forming hygroscopic electrolyte films.

### COMPARATIVE EXAMPLE 24

Silver and carbon-containing ink was silk screen printed on PET film to provide an image-defining electrode pattern where the minimum anode to cathode spacing was about 200 micrometers. The electrode pattern was coated with a layer of high resistance carbon ink prepared by mixing 16.7 g of Acheson Colloid Company's SS24210 ink (a silk screen printing ink dispersion of titanium dioxide and polymer) and 3.3. g of Acheson Colloid Company's Electrodeq 423SS ink (a silk screen printable carbon ink); the high resistance carbon ink was dried at 130 °C for 10 minutes to provide inter-electrode resistance in the range of 700 to 3,000 ohms. The high resistance carbon layer was coated with the electrochromic ink of Comparative Example 22 which was dried at 130 °C for 5 minutes to provide an ionically isolative layer providing an inter-electrode resistance in the range of 60 to 100 ohms. The ionically isolative layer was coated with a layer of the calcium chloride electrolyte solution of Comparative Example 23. Application of 3 volts DC caused a dark blue image to appear over the anodic electrodes; the image faded within seconds on removal of the electrical potential.

### COMPARATIVE EXAMPLE 25

5 g of phosphotungstic acid was dissolved in 25 ml water; concentrated ammonium hydroxide was added dropwise until the precipitate which formed redissolved; 10 g lithium bromide was added to the solution; 28 g of polyvinyl alcohol (11%) was added to the solution; then 2 drops of surfactant (Triton X-100) was added to provide an electrochromic tungstate dispersion.

### COMPARATIVE EXAMPLE 26

A display laminate was made in the manner of Comparative Example 24 except that the high resistance carbon ink layer was coated with an ionically isolative layer from a polyester solution containing dispersed ATO-coated titanium dioxide particles and an ionically conductive electrochromic layer was applied using the electrochromic tungstate dispersion of Comparative Example 25. The tungstate electrolyte layer was covered with a PET film. Application of 5 volts DC caused a dark blue image to appear over the anodic electrodes; the image faded slowly on removal of the electrical potential.

### EXAMPLE 27

2 g of pyrrole was added dropwise to a slurry of 20 g of ATO-coated titanium dioxide particles in 211 g of aqueous ferric chloride solution (5.5%) providing dark grey particles that were recovered by filtration. 4 g of the solids was mixed into 12.5 g of a solution of polybutylmethacrylate (14%) in butyl cellosolve acetate using a homogenizer to provide an ionically isolative film-forming dispersion of polypyrrole-coated conductive particles.

### EXAMPLE 28

An electrochromic display was prepared in the manner of Comparative Example 24 except that the high resistance carbon ink layer was coated with an ionically isolative layer using the polypyrrole-coated particle dispersion of Example 27. A lithium bromide ionically conductive layer was prepared from an aqueous solution. Application of 6 volts DC caused a yellow image to appear over the cathodic electrodes; the image faded in a few seconds on removal of the electrical potential.

While specific embodiments have been described herein, it should be apparent to those skilled in the art that various modifications thereof can be made without departing from the scope of the invention as recited in the claims. Accordingly, it is intended that the following claims cover all such modifications within the full inventive concept.

## Claims

1. An electroconductive particle comprising an electrically conductive non-metallic particle coated with an electrochromic material.

2. A particle according to claim 1 wherein said particle comprises electrically conductive material coated on a particulate substrate.

3. A particle according to claim 2 wherein said particulate substrate is a white or pastel colored mineral particle.

4. A particle according to claim 1 wherein said electrically conductive material is a doped tin oxide.

5. A particle according to claim 1 wherein said electrochromic material is selected from the group consisting of a polyaniline, a polypyrrole, a polythiophene, a polyvinylferrocene, a polyviologen, tungsten oxide, iridium oxide, molybdenum oxide, nickel oxide and Prussian blue.

6. A particle according to claim 1 comprising titanium dioxide particles coated with doped tin oxide and an outer layer of electrochromic material.

7. A dispersion of electroconductive particles according to claim 1 in an essentially electrically isolative transparent or translucent matrix (3a or 3b) of
(i) a melt processable polymer,
(ii) poylmerizable monomer or oligomer, or
(iii) a liquid containing dissolved or dispersed melt processable polymer, polymerizable monomer or oligomer.

8. A dispersion according to claim 7 wherein said polymer is a thermoplastic polymer selected from the group consisting of polystyrene, polyacrylate, polyurethane, polyolefin, polyester, polyamide, polycarbonate, styrene-acrylonitrile, ABS and blends thereof or an elastomeric polymer selected from the group consisting of butyl acrylate rubber, butadiene rubber, EPDM rubber, EP rubber, styrene butadiene rubber and nitrile rubber, or a thermoplastic elastomer.

9. A dispersion according to claim 7 wherein said electrically conductive material is particulate titanium dioxide coated with indium-doped tin oxide, antimony-doped tin oxide or fluorine-doped tin oxide.

10. An electrochromic laminate comprising segments having:
(a) a first layer (3a or 3b) consisting of one or more areas of an electrically conductive, essentially ionically isolative material;
(b) a second layer (4) consisting of ionically conductive material on said first layer,
wherein the interfacial zone between said first and said second layer comprises electrically conductive non-metallic particles coated with an electrochromic material, said particles being
(d) means (2, or 2 and 5) for applying an electrical potential between the ionically conductive and ionically isolative layers (4 and either 3a or 3b) to generate an electrochromic effect.

11. A laminate according to claim 10 wherein said electrically conductive non-metallic particles are doped tin oxide particles or doped tin oxide coated particles;
wherein said electrochromic material is selected from the group consisting of a polyaniline, a polypyrrole, a polythiophene, a polyvinylferrocene, a polyviologen, tungsten oxide, iridium oxide, molybdenum oxide, nickel oxide and Prussian blue; wherein said polymer matrix is an optically transparent or translucent clear thermoplastic polymer comprising a polystyrene, polyacrylate, polymethacrylate, polyurethane, polyolefin, polyester, polyamide, polycarbonate, polyvinyl halide, polyvinyl acetal, polyvinyl ester, polyvinyl alcohol, styreneacrylonitrile copolymer, ABS or blends thereof or an elastomeric polymer selected comprising acrylate rubber, butadiene rubber, EPDM rubber, EP rubber, styrene butadiene rubber and nitrile rubber or a thermoplastic elastomer comprising a blend of polypropylene and rubber;
wherein said ionically conductive layer comprises a polymeric gel containing a hygroscopic material or a humectant; wherein said hygroscopic material is a deliquescent material selected from the group consisting of lithium bromide, calcium chloride, glycerine, sodium dihydrogen phosphate and lithium trifluoromethylsulfonate; and wherein said means for applying electrical potential (2, or 2 and 5) comprises one or more electrodes of metal, metal oxide, carbon, intrinsically conducting polymer or polymer filled with conductive particles.

12. A laminate according to claim 10 wherein said electrical potential is applied across said layers by means of two or more electrodes (2, or 2 and 5) in contact with separate areas of the ionically isolative material (3a and 3b) electrically joined by said ionically conductive layer (4); wherein the electrical resistance between said electrodes is lowest in a path running from said electrodes to said ionically isolative material connected through said ionically conductive layer.

13. A laminate according to claim 10 wherein there is electrical conductivity between said areas of ionically isolative layers (3a and 3b) such that the path of lowest electrical resistance between said areas is through said ionically conductive layer (4), whereby said electrochromic image is erasable by removal of the electrical potential that created said image and without external means of short circuiting the electrodes that created the image.

14. A method of fabricating flexible electrochromic displays, said method comprising the steps of (a) forming electrodes (2) in a pattern on a flexible substrate (1), (b) coating said electrodes with a first layer (3a or 3b) consisting of electrically conductive, essentially ionically isolative material comprising one or more areas, and (c) applying a second layer (4) consisting of ionically conductive material, wherein the interfacial zone between said first and said second layer comprises electrically conductive non-metallic particles coated with an electrochromic material, said particles being dispersed in a transparent or translucent polymer matrix whereby, when an electrical potential is applied between the ionically conductive and ionically isolative layers, an electrochromic effect is generated.

15. A method according to claim 14 wherein said electrodes (2) comprise a plurality of lines having a width, separation or both width and separation not greater than about 1 micrometer.

16. A method according to claim 14 wherein said ionically isolative layer (3a) comprises a transparent or translucent matrix having dispersed electroconductive particles comprising mineral particles coated with electrically conductive metal and an electrochromic material.

17. A method according to claim 16 wherein said electroconductive particles comprise titanium dioxide particles coated with an electrically conductive doped tin oxide and electrochromic material.

18. A flexible display element comprising a polymeric film substrate coated with electrodes in an image-defining pattern, wherein said electrodes are coated with: (a) an ionically isolative layer of electrically conductive non-metallic particles coated with an electrochromic material, said particles being dispersed in a transparent or translucent polymer matrix, (b) an ionically conductive layer, and (c) a transparent barrier layer.

19. An electrochemically resistant metal laminate comprising a metal substrate coated with an electrically conductive, essentially ionically isolatiye composite layer of electroconductive particles coated with an electrochromic material, the particles comprising a composite of metal compounds and being dispersed in a polymer matrix.

## Patentansprüche

1. Ein elektrisch leitendes Teilchen, enthaltend ein mit einem elektrochromen Material beschichtetes, leitendes nicht metallisches Teilchen.

2. Ein Teilchen nach Anspruch 1, worin dieses Teilchen ein elektrisch leitendes Material, aufgebracht auf einem teilchenförmigen Substrat, enthält.

3. Ein Teilchen nach Anspruch 2, worin das teilchenförmige Substrat ein weißes oder pastellfarbenes mineralisches Teilchen ist.

4. Ein Teilchen nach Anspruch 1, worin das elektrisch leitende Material ein dotiertes Zinnoxid ist.

5. Ein Teilchen nach Anspruch 1, worin das elektrochrome Material ausgewählt ist aus der aus einem Polyanilin, einem Polypyrrol, einem Polythiophen, einem Polyvinylferrozen, einem Polyviologen, Wolframoxid, Iridiumoxid, Molybdänoxid, Nickeloxid und Preussisch Blau bestehenden Gruppe.

6. Ein Teilchen nach Anspruch 1, enthaltend Titandioxidteilchen, die mit dotiertem Zinnoxid und einer äußeren Schicht eines elektrochromen Materials beschichtet sind.

7. Eine Dispersion elektrisch leitender Teilchen nach Anspruch 1 in einer im wesentlichen elektrisch isolierenden transparenten oder transluzierenden Matrix (3a oder 3b)
(i) eines in der Schmelze verarbeitbaren Polymers,
(ii) eines polymerisierbaren Monomers oder Oligomers oder
(iii) einer Flüssigkeit, die gelöst oder dispergiert ein in der Schmelze verarbeitbares Polymer, ein polymerisierbares Monomer oder Oligomer enthält.

8. Eine Dispersion nach Anspruch 7, worin das Polymer ein thermoplastisches Polymer ist, ausgewählt aus der aus Polystyrol, Polyacrylat, Polyurethan, Polyolefin, Polyester, Polyamid, Polycarbonat, Styrol/Acrylnitril, ABS und deren Gemische besteht oder aus einem elastomeren Polymer, ausgewählt aus der aus Butylacrylatkautschuk, Butadienkautschuk, EPDM-Kautschuk, EP-Kautschuk, Styrol/Butadien-Kautschuk und Nitrilkautschuk oder einem thermoplastischen Elastomer bestehenden Gruppe.

9. Eine Dispersion nach Anspruch 7, worin das eiektrisch leitende Material ein teilchenförmiges Titandioxid ist, das beschichtet ist mit durch Indium dotiertem Zinnoxid, mit Antimon dotiertem Zinnoxid oder mit Fluor enthaltenden Verbindungen dotiertem Zinnoxid.

10. Ein elektrochromes Segmente umfassendes Laminat, die Segmente weisen auf:
(a) eine erste Schicht (3a oder 3b), bestehend aus einer oder mehreren Schichten eines elektrisch leitenden, im wesentlichen Ionen isolierenden Material;
(b) einer zweiten, aus einem Ionen leitenden Material bestehenden Schicht (4) auf der ersten Schicht, wobei die Grenzzone zwischen dieser ersten und dieser zweiten Schicht elektrisch leitende nicht metallische Teilchen enthält, die mit einem elektrochromen Material beschichtet sind, diese Teilchen sind in einer transparenten oder transluzierenden Polymermatrix dispergiert, und
(c) Mittel (2, oder 2 und 5) zum Anlegen eines elektrischen Potentials zwischen den Ionen leitenden und den Ionen isolierenden Schichten (4 und entweder 3a oder 3b), um eine elektrochrome Wirkung zu erzeugen.

11. Ein Laminat nach Anspruch 10, worin die elektrisch leitenden nichtmetallischen Teilchen dotierte Zinnoxid-Teilchen oder dotierte mit Zinnoxid beschichtete Teilchen sind; wobei das elektrochrome Material ausgewählt ist aus der Gruppe, die besteht aus einem Polyanylin, einem Polypyrrol, einem Polythiophen, einem Polyvinylferrozen, einem Polyviologen, Wolframoxid, Iridiumoxid, Molybdänoxid, Nickeloxid und Preussisch Blau; worin diese Polymermatrix ein optisch transparentes oder transluzierendes klares thermoplastisches Polymer ist, das ein Polystyrol, Polyacrylat, Polymethacrylat, Polyurethan, Polyolefin, Polyester, Polyamid, Polycarbonat, Polyvinylhalogenid, Polyvinylacetal, Polyvinylester, Polyvinylalkohol, Styrol/Acrylnitril-Copolymer, ABS oder deren Mischungen oder ein elastomeres Polymer ist, ausgewählt aus Acrylkautschuk, Butadienkautschuk, EPDM-Kautschuk, EP-Kautschuk, Styrol/Butadien-Kautschuk und Nitrilkautschuk oder einem thermoplastischen Elastomer, umfassend ein Gemisch aus Polypropylen und Kautschuk; worin die ionisch leitende Schicht ein polymeres Gel umfasst, das ein hygroskopisches Material oder ein feuchthaltendes Mittel enthält, worin das hygroskopische Material ein zerfließendes Material ist, ausgewählt aus der aus Lithiumbromid, Calciumchlorid, Glycerol, Natriumdihydrogenphosphat und Lithiumtrifluormethylsulfonat bestehenden Gruppe; und worin die Mittel zum Anlegen eines elektrischen Potentials (2, oder 2 und 5) eine oder mehrere Elektroden aus Metall, Metalloxid, Kohlenstoff, einem von sich aus leitenden Polymer oder ein mit leitenden Teilchen gefülltes Polymer umfaßt.

12. Ein Laminat nach Anspruch 10, worin das elektrisehe Potential angelegt wird über die Schichten mittels zweier oder mehrerer Elektroden (2 oder 2 und 5) in Kontakt mit separaten Flächen des Ionen isolierenden Materials (3a und 3b), die elektrisch verbunden durch die Ionen leitende Schicht (4) sind, wobei der elektrische Widerstand zwischen diesen Elektroden der geringste in einem Weg, ausgehend von diesen Elektroden zu dem Ionen isolierenden Material ist, das über die Ionen leitende Schicht verbunden ist.

13. Ein Laminat nach Anspruch 10, worin eine elektrische Leitfähigkeit zwischen den Flächen der Ionen isolierenden Schichten (3a und 3b) besteht, so daß der Weg des geringsten elektrischen Widerstands zwischen diesen Flächen derjenige durch die Ionen leitende Schicht (4) ist, wobei das elektrochrome Bild löschbar ist durch Entfernen des elektrischen Potentials, welches das Bild erzeugt hat, und ohne externe Mittel zum Kurzschließen der Elektroden, die das Bild erzeugt hatten.

14. Ein Verfahren zum Herstellen eines flexiblen elektrochromen Displays, dieses Verfahren umfaßt die Stufen (a) der Bildung von Elektroden (2) in einem Muster auf einem flexiblen Substrat (1), (b) Beschichten dieser Elektroden mit einer ersten Schicht (3a oder 3b) bestehend aus einem elektrisch leitenden, im wesentlichen Ionen isolierenden Material, das eine oder mehrere Flächen umfaßt, (c) Aufbringen einer zweiten Schicht (4), die aus einem Ionen leitenden Material besteht, wobei der Grenzbereich zwischen dieser ersten und dieser zweiten Schicht elektrisch leitende nicht metallische Teilchen umfasst, die mit einem elektrochromen Material beschichtet sind, diese Teilchen sind in einer transparenten oder transluzierenden Polymermatrix dispergiert, wobei in dem Fall, in dem ein elektrisches Potential angelegt wird, zwischen der Ionen leitenden und der Ionen isolierenden Schicht, ein elektrochromer Effekt erzeugt wird.

15. Ein Verfahren nach Anspruch 14, worin die Elektroden (2) eine Vielzahl von Leitungen mit einer Breite, einem Abstand oder Breite und Abstand von nicht mehr als etwa 1 Mikrometer umfassen.

16. Ein Verfahren nach Anspruch 14, worin die Ionen isolierende Schicht (3a) eine transparente oder transluzierende Matrix mit elektrisch leitenden Teilchen darin dispergiert enthält, wobei diese mineralische mit einem elektrisch leitenden Metall und einem elektrochromen Material beschichtete Teilchen umfassen.

17. Ein Verfahren nach Anspruch 16, worin die elektrisch leitenden Teilchen Titandioxidteilchen umfassen, die mit einem elektrisch leitenden dotiertem Zinnoxid und einem elektrochromen Material beschichtet sind.

18. Ein flexibles Display-Element, umfassend ein polymeres Film-Substrat, das mit Elektroden in einem ein Bild definierenden Muster beschichtet ist, worin diese Elektroden beschichtet sind mit (a) einer Ionen isolierenden Schicht von elektrisch leitenden nicht metallischen Teilchen, die mit einem elektrochromen Material beschichtet sind, wobei diese Teilchen dispergiert sind in (b) einer Ionen leitenden Schicht und (c) einer transparenten Barriereschicht.

19. Ein elektrochemisch widerstandsfähiges Metalllaminat, das ein Metallsubstrat umfasst, welches beschichtet ist mit einer elektrisch leitenden, im wesentlichen Ionen isolierenden Verbundschicht von elektrisch leitenden Teilchen, die beschichtet sind mit einem elektrochromen Material, wobei die Teilchen einen Verbund von Metallverbindungen umfassen und in einer Polymermatrix dispergiert sind.

## Revendications

1. Particule électroconductrice comprenant une particule non métallique, conductrice de l'électricité, revêtue d'un matériau électrochrome.

2. Particule suivant la revendication 1, dans laquelle la dite particule comprend un matériau conducteur de l'électricité revêtu sur un substrat particulaire.

3. Particule suivant la revendication 2, dans laquelle ledit substrat particulaire est une particule minérale blanche d'une couleur pastel.

4. Particule suivant la revendication 1, dans laquelle ledit matériau conducteur de l'électricité est dopé avec de l'oxyde d'étain.

5. Particule suivant la revendication 1, dans laquelle ledit matériau électrochrome est choisi parmi le goupe consistant en une polyaniline, un polypyrrole, un polythiophène, un polyvinylferrocène, un polyviologène, l'oxyde de tungstène, l'oxyde d'iridium, l'oxyde de molybdène, l'oxyde de nickel et le bleu de Prusse.

6. Particule suivant la revendication 1, comprenant des particules de dioxyde de titane revêtues d'oxyde d'étain dopé et d'une couche externe d'un matériau électrochrome.

7. Dispersion de particules électroconductrices suivant la revendication 1, dans une matrice transparente ou translucide, essentiellement isolante de l'électricité (3a ou 3b) de
(i) un polymère pouvant être traité à l'état fondu,
(ii) un monomère ou oligomère polymérisable, ou
(iii) un liquide contenant un polymère pouvant être traité à l'état fondu, un monomère ou oligomère polymérisable, dissous ou dispersé.

8. Dispersion suivant la revendication 7, dans laquelle le polymère est un polymère thermoplastique choisi parmi le groupe consistant en un polystyrène, un polyacrylate, un polyuréthanne, une polyoléfine, un polyester, un polyamide, un polycarbonate, un styrène-acrylonitrile, un ABS et leurs mélanges ou un polymère élastomère choisi parmi le groupe consistant en le caoutchouc acrylate de butyle, le caoutchouc butadiène, le caoutchouc EPDM, le caoutchouc EP, le caoutchouc styrène-butadiène et le caoutchouc nitrile, ou un élastomère thermoplastique.

9. Dispersion suivant la revendication 7, dans laquelle ledit matériau conducteur de l'électricité est du dioxyde de titane particulaire, revêtu d'oxyde d'étain dopé à l'indium, d'oxyde d'étain dopé à l'antimoine ou d'oxyde d'étain dopé au fluor.

10. Stratifié électrochrome comprenant des segments ayant :
(a) une première couche (3a ou 3b) consistant en une ou plusieurs zones d'un matériau conducteur de l'électricité, essentiellement ioniquement isolant ;
(b) une deuxième couche (4) consistant en un matériau ioniquement conducteur sur ladite première couche, où la zone à l'interface entre lesdites première et deuxième couches comprend des particules non métalliques conductrices de l'électricité, revêtues d'un matériau électrochrome, lesdites particules étant dispersées dans une matrice polymère translucide ou transparente ;
(d) des moyens (2, ou 2 et 5) pour appliquer un potentiel électrique entre les couches ioniquement conductrice et ioniquement isolante (4 et 3a ou 3b) pour générer un effet électrochrome.

11. Stratifié suivant la revendication 10, dans lequel lesdites particules non métalliques conductrices de l'électricité sont des particules d'oxyde d'étain dopé ou des particules revêtues d'oxyde d'étain dopé ; dans lequel le matériau électrochrome est choisi parmi parmi le groupe consistant en une polyaniline, un polypyrrole, un polythiophène, un polyvinylferrocène, un polyviologène, l'oxyde de tungstène, l'oxyde d'iridium, l'oxyde de molybdène, l'oxyde de nickel et le bleu de Prusse ; dans lequel la matrice polymère est un polymère thermoplastique optiquement transparent ou translucide, comprenant un polystyrène, un polyacrylate, un polyméthacrylate, un polyuréthanne, une polyoléfine, un polyester, un polyamide, un polycarbonate, un poly(halogénure de vinyle), un polyvinylacétal, un poly(ester vinylique), un poly(alcool vinylique), un copolymère styrène-acrylonitrile, un ABS et leurs mélanges ou un polymère élastomère comprenant le caoutchouc acrylate, le caoutchouc butadiène, le caoutchouc EPDM, le caoutchouc EP, le caoutchouc styrène-butadiène et le caoutchouc nitrile, ou un élastomère thermoplastique comprenant un mélange d'un polypropylène et d'un caoutchouc ; dans lequel ladite couche ioniquement conductrice comprend un gel polymère contenant un matériau hygroscopique ou un humidifiant ; dans lequel ledit matériau hygroscopique est un matériau déliquescent choisi parmi le groupe consistant en le bromure de lithium, le chlorure de calcium, la glycérine, le dihydrogénophosphate de sodium et le trifluorométhylsulfonate de sodium, et dans lequel lesdits moyens pour appliquer un potentiel électrique (2 ou 2 et 5) comprend une ou plusieurs électrodes en métal, oxyde métallique, carbone, polymère intrinsèquement conducteur ou polymère chargé de particules conductrices.

12. Stratifié selon la revendication 10, dans lequel ledit potentiel électrique est appliqué au travers desdites couches à l'aide de deux ou plusieurs électrodes (2 ou 2 et 5) en contact avec les zones séparées du matériau ioniquement isolant (3a et 3b) joint de manière électrique par ladite couche ioniquement conductrice (4), dans lequel la résistance électrique entre lesdites électrodes est la plus faible dans un trajet allant desdites électrodes audit matériau ioniquement isolant connecté par ladite couche ioniquement conductrice.

13. Stratifié selon la revendication 10, dans lequel il existe une conductivité électrique entre lesdites zones des couches ioniquement isolantes (3a et 3b) de sorte que le trajet de résistance électrique la plus faible entre lesdites zones est au travers de ladite couche ioniquement conductrice (4), ce par quoi ladite image électrochrome peut être éffacée par élimination du potentiel électrique qui a créé ladite image et sans moyen externe pour court-circuiter des électrodes qui ont créé l'image.

14. Procédé de préparation d'affichages électrochromes flexibles, ledit procédé comprenant les étapes consistant à :
(a) former des électrodes (2) selon un schéma sur un substrat flexible (1) ;
(b) revêtir lesdites électrodes d'une première couche (3a ou 3b) consistant en un matériau conducteur de l'électricité, essentiellement ioniquement isolant, comprenant une ou plusieurs zones, et
(c) appliquer une deuxième couche (4) consistant en un matériau ioniquement conducteur, où la zone à l'interface entre lesdites première et deuxième couches comprend des particules non métalliques conductrices de l'électricité revêtues d'un matériau électrochrome, lesdites particules étant dispersées dans une matrice polymère translucide ou transparente,
ce par quoi, lorsqu'un potentiel électrique est appliqué entre les couches ioniquement conductrice et ioniquement isolante, on génère un effet électrochrome.

15. Procédé suivant la revendication 14, dans lequel lesdites électrodes (2) comprennent un série de lignes ayant une largeur, une séparation ou une largeur et une séparation non supérieures à environ 1 µm.

16. Procédé suivant la revendication 14, dans lequel ladite couche ioniquement isolante (3a) comprend une matrice transparente ou translucide ayant des particules électroconductrices dispersées, comprenent des particules minérales revêtues d'un métal électroconducteur et d'un matériau électrochrome.

17. Procédé suivant la revendication 16, dans lequel lesdites particules électroconductrices comprennent des particules en dioxyde de titane revêtues d'un oxyde d'étain dopé de manière conductrice de l'électricité et d'un matériau électrochrome.

18. Elément d'affichage flexible comprenant un substrat en film polymère revêtu d'électrodes selon un schéma définissant une image, dans lequel lesdites électrodes sont revêtues de
(a) une couche ioniquement isolante de particules non métalliques conductrices de l'électricité, revêtues d'un matériau électrochrome, lesdites particules étant dispersées dans une matrice polymère transparente ou translucide ;
(b) une couche ioniquement conductrice, et
(c) un couche transparente de barrière.

19. Stratifié métallique électrochimiquement résistant, comprenant un substrat métallique revêtu d'une couche composite conductrice de l'électricité, essentiellement ioniquement isolante de particules électroconductrices revêtues d'un matériau électrochrome, les particules comprenant un composite de composés métalliques et étant dispersées dans une matrice polymère.
